## Europäisches Patentamt
## European Patent Office
## Office européen des brevets

(11) Veröffentlichungsnummer: **0 063 756**
**B1**

# EUROPÄISCHE PATENTSCHRIFT

(45) Veröffentlichungstag der Patentschrift:
06.02.85

(21) Anmeldenummer: **82103197.8**

(22) Anmeldetag: **16.04.82**

(51) Int. Cl.⁴: **B 60 L 11/18,** H 02 P 7/28

(54) Elektrospeicher-Strassenfahrzeug.

(30) Priorität: **24.04.81 DE 3116341**

(43) Veröffentlichungstag der Anmeldung:
**03.11.82 Patentblatt 82/44**

(45) Bekanntmachung des Hinweises auf die Patenterteilung:
**06.02.85 Patentblatt 85/6**

(84) Benannte Vertragsstaaten:
**BE FR GB IT NL SE**

(56) Entgegenhaltungen:
**DE - A - 1 513 169**
**FR - A - 1 297 642**
**FR - A - 2 252 685**
**US - A - 4 258 304**

(73) Patentinhaber: **BROWN, BOVERI & CIE Aktiengesellschaft, Kallstadter Strasse 1, D-6800 Mannheim 31 (DE)**

(72) Erfinder: **Kahlen, Hans, Dr.-Ing., Holbeinstrasse 11, D-6940 Weinheim-Sulzbach (DE)**

(74) Vertreter: **Kempe, Wolfgang, Dr. et ai, c/o BROWN, BOVERI & CIE AG Kallstadter Strasse 1 Postfach 351, D-6800 Mannheim 31 (DE)**

## Beschreibung

Die Erfindung bezieht sich auf ein Elektrospeicherstrassenfahrzeug mit einem fremderregten Gleichstrommotor mit Ankerstromsteller und Feldstromsteller und mit einem Bordbatterieladegerät, bestehend aus der Reihenschaltung eines Hochsetzstellers und eines Tiefsetzstellers mit gemeinsamem Kondensator, wobei Hochsetzsteller und Tiefsetzsteller jeweils mindestens einen Transistor, eine Drosselspule und eine Freilaufdiode aufweisen, der Hochsetzsteller eingangsseitig über eine Gleichrichterbrückenschaltung mit einem Wechselstromnetz verbindbar ist, und der Ausgang des Tiefsetzstellers mit der Leistungsbatterie des Fahrzeuges beschaltet ist.

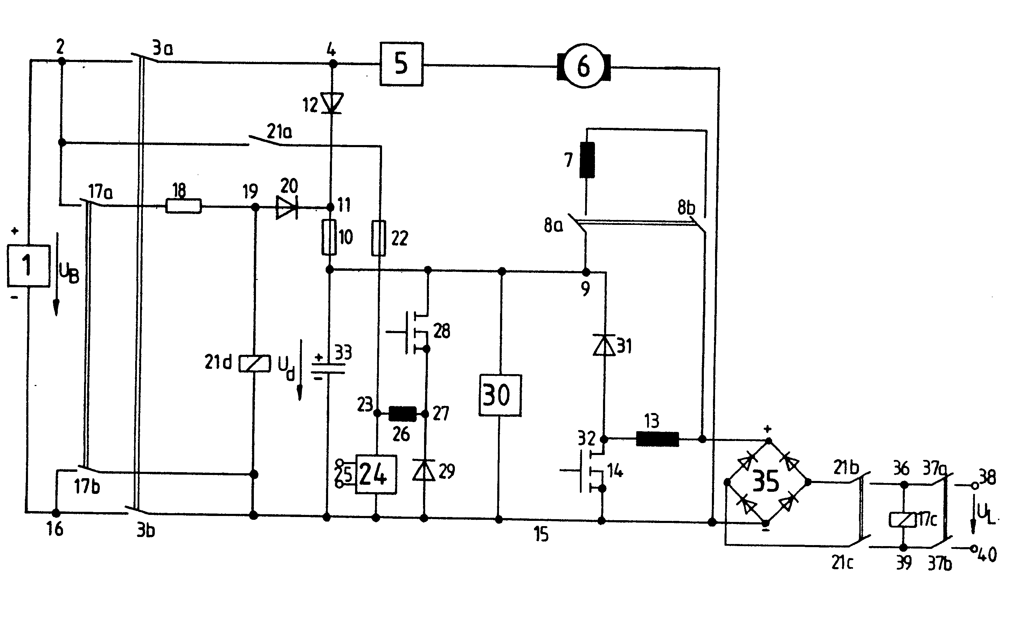

Ein Bordbatterieladegerät für ein derartiges Elektrospeicherstrassenfahrzeug gehört zum Inhalt der am 26.8.82 veröffentlichten DE-PA P Nr. 3104965.6 (s. insbesondere Fig. 3). Unter den Begriffen Tiefsetzsteller und Hochsetzsteller werden Gleichstrompulswandler verstanden, wie sie z.B. aus Heumann/Stumpe, „Thyristoren", 1974, Teubner-Verlag Stuttgart, S. 147, Bild 147.1a und b bekannt sind. Der Hochsetzsteller eignet sich zur sinusförmigen Stromentnahme aus einem Wechselstromnetz. Für Batteriespannungen, die kleiner als der Scheitelwert der Wechselspannung des ladenden Wechselstromnetzes sind, ist ein zweites Stellglied zur Spannungsanpassung der Tiefsetzsteller notwendig.

Ein solches Bordbatterieladegerät dient zum Laden einer Batterie mit sinusförmigem Netzstrom unabhängig vom Verhältnis der Eingangs- zur Ausgangsspannung und kann bedingt durch sein geringes Gewicht als zusätzliches Gerät auf dem Fahrzeug mitgeführt werden.

Der Erfindung liegt davon ausgehend die Aufgabe zugrunde, die elektronischen Stellglieder für das Elektrospeicherstrassenfahrzeug so zu konzipieren, dass sie ausserhalb des Fahrbetriebes zu einem Bordbatterieladegerät für die Leistungsbatterie des Fahrzeugs kombiniert werden können.

Diese Aufgabe wird erfindungsgemäss durch ein Elektrospeicherstrassenfahrzeug mit den folgenden Merkmalen gelöst:

— die Gleichrichterbrückenschaltung ist über erste Schalter mit Netzanschlussklemmen verbindbar, wobei die ersten Schalter in Abhängigkeit von der Spannungshöhe am gemeinsamen Kondensator von Hochsetzsteller und Tiefsetzsteller schliessbar sind,

— im Zuge der positiven Leitung zwischen Leistungsbatterie und Ausgang des Tiefsetzstellers ist ein zweiter in Abhängigkeit von der Spannungshöhe am Kondensator schliessbarer Schalter angeordnet,

— an die Leistungsbatterie sind in Abhängigkeit vom Vorliegen einer Wechselspannung an den Netzanschlussklemmen schliessbare dritte Schalter angeschlossen,

— im Zuge der positiven Leitung zwischen drittem Schalter und Kondensator sind ein Widerstand und eine Diode in Reihe angeordnet,

— zwischen den Ausgangsklemmen des Tiefsetzstellers des Bordbatterieladegerätes ist ein im Fahrbetrieb zuschaltbarer Gegentaktwandler geschaltet, an dessen Ausgangsklemmen eine Nebenaggregatebatterie geringerer Spannung als die der Leistungsbatterie liegt,

— der Hochsetzsteller des Bordbatterieladegerätes dient im Fahrbetrieb als Tiefsetzsteller für den Feldstrom, indem die Feldwicklung des Gleichstrommotors über im Fahrbetrieb schliessbare vierte Schalter an die positive Eingangs- und Ausgangsklemme des Hochsetzstellers angeschlossen ist, und

— die Leistungsbatterie ist mit im Fahrbetrieb schliessbaren fünften Schaltern verbunden, wobei an diesen fünften Schaltern der Ankerstromsteller mit in Reihe liegendem Anker des Gleichstrommotors sowie über eine Diode der Kondensator angeschlossen sind.

Die mit der Erfindung verbundenen Vorteile bestehen insbesondere darin, dass das Bordbatterieladegerät aus Einzelkomponenten besteht, die auch für den Fahrbetrieb des Elektrospeicherstrassenfahrzeuges eingesetzt werden. Es sind also weder ein getrenntes Ladegerät noch zusätzliche Stellglieder notwendig, sondern das Bordbatterieladegerät wird durch Kombination aus dem Feldstromsteller und dem Ladewandler für die Nebenaggregatebatterie erhalten. Vorteilhaft sind Hochsetzsteller und Tiefsetzsteller am gleichen Kondensator angeschlossen.

Ein Ausführungsbeispiel der Erfindung ist nachfolgend anhand der Zeichnung erläutert. In der Zeichnung ist das erfindungsgemässe Elektrospeicherstrassenfahrzeug mit dem Bordbatterieladegerät dargestellt.

Eine Leistungsbatterie 1 des Fahrzeuges ist über ihre positive Anschlussleitung, einen Anschlusspunkt 2, einen Schalter 3a und einen Anschlusspunkt 4 mit einem Ankerstromsteller 5 verbunden. Der Ankerstromsteller 5 speist den Ankerstromkreis eines Gleichstrommotors 6. Der Ankerstromkreis ist des weiteren über einen Schalter 3b an die negative Anschlussleitung der Batterie 1 angeschlossen, wobei die Schalter 3a, 3b miteinander gekoppelt sind. Die frenderregte Feldwicklung 7 des Motors 6 ist über einen Schalter 8a, einen Anschlusspunkt 9, eine Sicherung 10, einen Anschlusspunkt 11 und eine Diode 12 mit dem Anschlusspunkt 4 verbunden. Der weitere Anschluss der Feldwicklung 7 liegt über einem Schalter 8b, einer Drosselspule 13 und einem Transistor 14 am Anschlusspunkt 15, der über den Schalter 3b und einen weiteren Anschlusspunkt 16 mit der negativen Anschlussleitung der Batterie 1 verbunden ist. Die Schalter 8a und 8b sind miteinander gekoppelt.

Mit dem Anschlusspunkt 2 ist ein Schalter 17a verbunden, der über einen Widerstand 18, einen Anschlusspunkt 19 und eine Diode 20 am Anschlusspunkt 11 liegt. Ein mit dem Schalter 17a gekoppelter Schalter 17b ist zwischen den Anschlusspunkten 15 und 16 angeordnet. Mit dem Anschlusspunkt 2 ist ferner ein Schalter 21a verbunden, der über eine Sicherung 22 und einem Anschlusspunkt 23 an einem Gegentaktwandler 24 liegt. Der Gegentaktwandler 24 ist ferner mit dem Anschlusspunkt 15 verbunden und besitzt Ausgangsklemmen 25, an die eine Nebenaggregatebatterie angeschlossen ist.

Am Anschlusspunkt 23 liegt ferner eine Drosselspule 26, die andererseits über einen Anschlusspunkt 27 und einen Transistor 28 mit dem Anschlusspunkt 9 verbunden ist. Zwischen den Anschlusspunkten 27 und 15 liegt eine Diode 29. Zwischen den Anschlusspunkten 9 und 15 kann eine Fahrzeugheizung 30 angeschlossen sein. Am Anschlusspunkt 9 liegt eine Diode 31, die über einen Anschlusspunkt 32 mit dem Transistor 14 verbunden ist. Zwischen den Anschlusspunkten 9 und 15 liegt des weiteren ein Kondensator 33.

Der Anschlusspunkt 15 liegt am negativen Anschluss einer Gleichrichterbrückenschaltung 35. Der positive Anschluss der Brücke 35 liegt am Verbindungspunkt von Drosselspule 13 und Schalter 8b. Der eine Wechselspannungsanschluss der Brücke 35 liegt über einem Schalter 21b, einem Anschlusspunkt 36 und einem Schalter 37a an einer Netzanschlussklemme 38. Der weitere Wechselspannungsanschluss der Brücke 35 liegt über einem Schalter 21c, einem Anschlusspunkt 39 und einem Schalter 37b an einer weiteren Netzanschlussklemme 40. Die Schalter 21b und 21c sind miteinander und mit dem Schalter 21a gekoppelt. Das die Schalter 21a, 21b, 21c ansteuernde Relais 21d ist zwischen den Anschlusspunkten 15 und 19 angeordnet. Das die Schalter 17a und 17b ansteuernde Relais 17c liegt zwischen den Anschlusspunkten 36 und 39. Die Schalter 37a, 37b sind ebenfalls miteinander gekoppelt.

Die Spannung der Leistungsbatterie 1 ist mit $U_B$, die Spannung am Kondensator 33 mit $U_d$ sowie die Spannung zwischen den Netzanschlussklemmen 38 und 40 mit $u_L$ (Netzwechselspannung) bezeichnet.

Der Feldstromsteller besteht aus den Bauteilen Transistor 14, Diode 31 (Freilaufdiode), Drosselspule 13 und ist an den Kondensator 33 (Stützkondensator) angeschlossen. Der Feldstromsteller hat im Fahrbetrieb die Aufgabe, den Feldstrom des fremderregten Gleichstrommotors 6 zu stellen. Im Fahrbetrieb sind die Schalter 3a, 3b und 8a, 8b geschlossen und sämtliche weiteren Schalter geöffnet. Damit ergibt sich ein Stromfluss im Ankerkreis vom positiven Anschluss der Leistungsbatterie 1 über den geschlossenen Schalter 3a, den Ankerstromsteller 5 (= Halbleiterstellglied für den Ankerstrom), den Anker des Gleichstrommotors 6 und den geschlossenen Schalter 3b zum negativen Anschluss der Leistungsbatterie 1. Der Kondensator 33 wird über die geschlossenen Schalter 3a, 3b, die Diode 12 und die Sicherung 10 aufgeladen, so dass die Spannung $U_d$ am Kondensator 33 ungefähr der Spannung $U_B$ an der Leistungsbatterie 1 beträgt. Der am Kondensator 33 angeschlossene Feldstromsteller arbeitet im Fahrbetrieb als Tiefsetzsteller (Längssteller), und es ergibt sich ein Feldstromfluss über den geschlossenen Schalter 8a, die Feldwicklung 7, den geschlossenen Schalter 8b, die Drosselspule 13 und den leitenden Transistor 14 bzw. ein Kreisstrom über die geschlossenen Schalter 8a, 8b, die Feldwicklung 7, die Drossel 13 und die Diode 31, wenn der Transistor 14 sperrt.

Ein Tiefsetzsteller ist z.B. aus Heumann/Stumpe, „Thyristoren", 1974, S. 147, Bild 147.1a, bekannt.

Das Elektrospeicherstrassenfahrzeug weist des weiteren einen Ladewandler, bestehend aus einem Tiefsetzsteller (Längssteller) und einem Gegentaktwandler 24, auf. Der Tiefsetzsteller des Ladewandlers besteht aus dem Transistor 28, der Diode 29 (Freilaufdiode) und der Drosselspule 26. Der Ladewandler hat die Aufgabe, die Spannung $U_B$ der Leistungsbatterie 1 zum Laden der Nebenaggregatebatterie (Bordbatterie) herabzusetzen und dabei beide Batterien galvanisch zu trennen. Der Ladewandler wird ebenfalls am Kondensator 33 betrieben. Im Fahrbetrieb, d.h. bei geschlossenen Schaltern 3a, 3b, ergibt sich ein Stromfluss über den leitenden Transistor 28, die Drosselspule 26 und den Gegentaktwandler 24 bzw. ein Kreisstrom über die Diode 29 (Freilaufdiode), die Drosselspule 26 und den Gegentaktwandler 24, wenn der Transistor 28 sperrt.

Gegentaktwandler 24 und Tiefsetzsteller des Ladewandlers müssen so miteinander synchronisiert werden, dass jeweils der Transistor 28 des Tiefsetzstellers mit einem Transistor des Gegentaktwandlers 24 eingeschaltet wird. Die Schaltverluste der Transistoren sind damit am geringsten. Die Spannungszeitflächen sind für jeden Takt gleich.

Beim Ladebetrieb werden zunächst die Schalter 3a, 3b und 8a, 8b geöffnet. Bei Anlagen der Netzwechselspannung $u_L$ an die Netzanschlussklemmen 38 und 40 und bei Schliessen der Schalter 37a und 37b liegt das Relais 17c an Spannung und die Schalter 17a, 17b werden geschlossen. Es ergibt sich ein Stromfluss vom positiven Anschluss der Leistungsbatterie 1 über den geschlossenen Schalter 17a, den Widerstand 18, die Diode 20, die Sicherung 10, den Kondensator 33 und den geschlossenen Schalter 17b zum negativen Anschluss der Leistungsbatterie 1. Durch den Widerstand 18 wird der Ladestrom des Kondensators 33 begrenzt. Durch das Relais 21d werden ab einem festgelegten Spannungswert am Kondensator 33 die Schalter 21a, 21b, 21c geschlossen. Die Netzwechselspannung $u_L$ liegt an der Gleichrichterbrückenschaltung 35.

Der Feldstromsteller arbeitet im Ladebetrieb als Hochsetzsteller (Aufwärtssteller). Ein derartiger Hochsetzsteller ist z.B. aus Heumann/Stumpe, „Thyristoren", 1974, Teubner-Verlag Stuttgart, S. 147, Bild 147.1b, bekannt. Es ergibt sich ein Stromfluss vom positiven Anschluss der Gleichrichterbrückenschaltung 35 über die Drosselspule 13, die Diode 31 und den Kondensator 33 zum negativen Anschluss der Brücke 35, solange der Transistor 19 sperrt. Bei leitendem Transistor 14 ergibt sich ein Kreisstrom über die Drossel 13, den Transistor 14 und die Brücke 35.

Beim Ladebetrieb werden die Transistoren des Gegentaktwandlers 24 gesperrt, so dass nur noch der Tiefsetzsteller des Ladewandlers im Einsatz ist.

Es ergibt sich ein Stromfluss vom Kondensator 33 über den leitenden Transistor 28, die Drossel 26, die Sicherung 22, den geschlossenen Schalter 21a, die Leistungsbatterie 1 und den geschlossenen Schalter 17b zum Kondensator 33. Bei gesperrtem Transistor 28 ergibt sich ein Kreisstrom über die Diode 29 (Freilaufdiode), die Drossel 26, die Sicherung 22, den Schalter 21a, die Leistungsbatterie 1 und den Schalter 17b. Beim Ladebetrieb hat der Tiefsetzsteller des Ladewandlers die Aufgabe, die hohe Spannung $U_d$ des Zwischenkreises (Kondensatorspannung) auf die Batteriespannung $U_B$ herabzusetzen. Die Drossel 26 glättet den Ladestrom der Leistungsbatterie 1.

Die Transistoren 14 und 28 können als bipolare Transistoren oder als Leistungsfeldeffekttransistoren ausgeführt werden. Bei der Kombination Ladewandler plus Feldstromsteller zu einem Batterieladegerät (Bordladegerät) sind die Bauteile für die Leistung des Bordladegerätes auszulegen. Im Feldbetrieb sind die Stellglieder (Transistoren) weniger ausgelastet. Dies kann durch den Einsatz einer Zwangsbelüftung beim Ladebetrieb mittels eines getrennten, vom Wechselspannungsnetz zu versorgenden Lüfters berücksichtigt werden.

Der beim Ladebetrieb als Hochsetzsteller arbeitende Feldstromsteller wird stromgeregelt. Der Stromsollwert wird proportional der Netzwechselspannung $u_L$ gewählt, der Stromistwert wird beispielsweise durch einen nach der Diode 31 angeordneten Messwiderstand (Shunt) ermittelt. Die Spannung $U_d$ am Kondensator 33 stellt sich frei ein. Erreicht die Spannung $U_d$ einen festlegbaren Höchstwert, so wird der Stromsollwert stetig gesenkt, bzw. der Aufwärtssteller wird ganz gesperrt.

Für den Tiefsetzsteller des Ladewandlers wird der Stromsollwert fest vorgegeben. Besteht die Leistungsbatterie 1 aus Bleiakkumulatoren, so wird nach Erreichen der Gasungsspannung der Stromistwert bis zu einem zulässigen Nachladestrom reduziert. Der Batteriespannungswert $U_B$ wird mit Hilfe eines Differenzverstärkers gemessen. Unterschreitet die Spannung $U_d$ am Kondensator 33 einen vorgebbaren Mindestwert, so wird der Tiefsetzsteller ganz gesperrt.

## Patentansprüche

1. Elektrospeicherstrassenfahrzeug mit einem fremderregten Gleichstrommotor (6) mit Ankerstromsteller (5) und Feldstromsteller und mit einem Bordbatterieladegerät, bestehend aus der Reihenschaltung eines Hochsetzstellers und eines Tiefsetzstellers mit gemeinsamem Kondensator (33), wobei Hochsetzsteller und Tiefsetzsteller jeweils mindestens einen Transistor (14 bzw. 28), eine Drosselspule (13 bzw. 26) und eine Freilaufdiode (31 bzw. 29) aufweisen, der Hochsetzsteller eingangsseitig über eine Gleichrichterbrückenschaltung (35) mit einem Wechselstromnetz (38, 40) verbindbar ist und der Ausgang des Tiefsetzstellers mit der Leistungsbatterie (1) des Fahrzeugs beschaltet ist, gekennzeichnet durch folgende Merkmale:

– die Gleichrichterbrückenschaltung (35) ist über erste Schalter (21b, 21c) mit Netzanschlussklemmen (38, 40) verbindbar, wobei die ersten Schalter (21b, 21c) in Abhängigkeit von der Spannungshöhe ($U_d$) am gemeinsamen Kondensator (33) von Hochsetzsteller (13, 14, 31) und Tiefsetzsteller (26, 28, 29) schliessbar sind,
– im Zuge der positiven Leitung zwischen Leistungsbatterie (1) und Ausgang des Tiefsetzstellers ist ein zweiter in Abhängigkeit von der Spannungshöhe ($U_d$) am Kondensator (33) schliessbarer Schalter (21a) angeordnet,
– an die Leistungsbatterie (1) sind in Abhängigkeit vom Vorliegen einer Wechselspannung an den Netzanschlussklemmen (38, 40) schliessbare dritte Schalter (17a, 17b) angeschlossen,
– im Zuge der positiven Leitung zwischen drittem Schalter (17a) und Kondensator (33) sind ein Widerstand (18) und eine Diode (20) in Reihe angeordnet,
– zwischen den Ausgangsklemmen des Tiefsetzstellers des Bordbatterieladegerätes ist ein im Fahrbetrieb zuschaltbarer Gegentaktwandler (24) geschaltet, an dessen Ausgangsklemmen (25) eine Nebenaggregatebatterie geringerer Spannung als die der Leistungsbatterie (1) liegt,
– der Hochsetzsteller des Bordbatterieladegerätes dient im Fahrbetrieb als Tiefsetzsteller für den Feldstrom, indem die Feldwicklung (7) des Gleichstrommotors (6) über im Fahrbetrieb schliessbare vierte Schalter (8a, 8b) an die positive Eingangs- und Ausgangsklemme des Hochsetzstellers angeschlossen ist, und
– die Leistungsbatterie (1) ist mit im Fahrbetrieb schliessbaren fünften Schaltern (3a, 3b) verbunden, wobei an diesen fünften Schaltern (3a, 3b) der Ankerstromsteller (5) mit in Reihe liegendem Anker des Gleichstrommotors (6) sowie über eine Diode (12) der Kondensator (33) angeschlossen sind.

2. Elektrospeicherstrassenfahrzeug nach Anspruch 1, dadurch gekennzeichnet, dass zwischen dem Kondensator (33) und der Leistungsbatterie (1) eine Sicherung (10) angeordnet ist.

3. Elektrospeicherstrassenfahrzeug nach wenigstens einem der vorstehenden Ansprüche, dadurch gekennzeichnet, dass zwischen dem Ausgang des Tiefsetzstellers des Bordbatterieladegerätes und der Leistungsbatterie (1) eine Sicherung (22) angeordnet ist.

4. Elektrospeicherstrassenfahrzeug nach wenigstens einem der vorstehenden Ansprüche, dadurch gekennzeichnet, dass eine Fahrzeugheizung (30) parallel zum Kondensator (33) liegt.

5. Elektrospeicherstrassenfahrzeug nach wenigstens einem der vorstehenden Ansprüche, dadurch gekennzeichnet, dass zwischen den ersten Schaltern (21b, 21c) und den Netzanschlussklemmen (38, 40) weitere Schalter (37a, 37b) angeordnet sind.

## Claims

1. Battery-electric road vehicle containing a separately excited direct-current motor (6) including armature-current regulators (5) and field-current regulators and an on-board battery charging device consisting of a high-level voltage controller connected in series with a low-level voltage controller and having a common capacitor (33), the high-level voltage controller and the low-level voltage controller comprising in each case at least one transistor (14 resp. 28), a choke coil (13 resp. 26) and a free-wheeling diode (31 resp. 29) and the input of the high-level voltage controller being adapted to be connected *via* a rectifier bridge circuit (35) to an alternating-current mains (38, 40) and the output of the low-level voltage controller being connected to the high-performance battery (1) of the vehicle, characterised by the following features:

— the rectifier bridge circuit (35) can be connected *via* first switches (21b, 21c) to mains terminals (38, 40), the first switches (21b, 21c) being adapted to be closed as a function of the voltage amplitude ($U_d$) at the common capacitor (33) of the high-level voltage controller (13, 14, 31) and the low-level voltage controller (26, 28, 29),

— in the path of the positive line between the high-performance battery (1) and the output of the low-level voltage controller, a second switch (21a) is arranged which can be closed as a function of the voltage amplitude ($U_d$) at the capacitor (33),

— third switches (17a, 17b) are connected to the high-performance battery (1), which switches can be closed as a function of the presence of an alternating voltage at the mains terminals (38, 40),

— in the path of the positive line between the third switch (17a) and the capacitor (33), a resistance (18) and a diode (20) are arranged in series,

— between the output terminals of the low-level voltage controller of the on-board battery charging device, a push-pull converter (24) is connected which can be switched into circuit in vehicle operation and at the output terminals (25) of which a battery for auxiliary units is connected which has a lower voltage than that of the high-performance battery (1),

— in vehicle operation, the high-level voltage controller of the on-board battery charging device is used as low-level voltage controller for the field current, in that the field winding (7) of the direct-current motor (6) is connected *via* fourth switches (8a, 8b), which can be closed in vehicle operation, to the positive input and output terminals of the high-level voltage controller, and

— the high-performance battery (1) is connected to fifth switches (3a, 3b), which can be closed in vehicle operation, these fifth switches (3a, 3b) being connected to the armature current controller (5) with the series-connected armature of the direct-current motor (6) and, *via* a diode (12), to the capacitor (33).

2. Battery-electric road vehicle according to Claim 1, characterised in that a fuse (10) is arranged between the capacitor (33) and the high-performance battery (1).

3. Battery-electric road vehicle according to at least one of the preceding claims, characterised in that a fuse (22) is arranged between the output of the low-level voltage controller of the on-board battery charging device and the high-performance battery (1).

4. Battery-electric road vehicle according to at least one of the preceding claims, characterised in that a vehicle heater (30) is connected in parallel with the capacitor (33).

5. Battery-electric road vehicle according to at least one of the preceding claims, characterised in that further switches (37a, 37b) are arranged between the first switches (21b, 21c) and the mains terminals (38, 40).

**Revendications**

1. Véhicule routier à accumulateur électrique, comportant un moteur (6) à courant continu à excitation indépendante muni d'un régulateur (5) de courant d'induit et d'un régulateur de courant de champ, ainsi qu'un chargeur de bord pour la batterie, consistant en un branchement en série d'un régulateur de haute puissance et d'un régulateur de basse puissance munis d'un condensateur commun (33), le régulateur de haute puissance et le régulateur de basse puissance comprenant, à chaque fois, au moins un transistor (14 resp. 28), une bobine d'induction (13 resp. 26) et une diode de roue libre (31 resp. 29), le régulateur de haute puissance pouvant être raccordé par son côté entrée à un réseau (38, 40) de courant alternatif par l'intermédiaire d'un circuit redresseur (35) monté en pont, et la sortie du régulateur de basse puissance étant raccordée à la batterie de puissance (1) du véhicule, caractérisé par les points suivants:

— le circuit redresseur (35) monté en pont peut être raccordé par l'intermédiaire de premiers interrupteurs (21b, 21c) à des bornes (38, 40) de raccordement au réseau, les premiers interrupteurs (21b, 21c) pouvant être fermés en fonction de la valeur de la tension ($U_d$) appliquée au condensateur commun (33) au régulateur de haute puissance (13, 14, 31) et au régulateur de basse puissance (26, 28, 29),

— un deuxième interrupteur (21a), pouvant être fermé en fonction de la valeur de la tension ($U_d$) appliquée au condensateur (33), est situé sur le trajet du conducteur positif entre la batterie de puissance (1) et la sortie du régulateur de basse puissance,

— des troisièmes interrupteurs (17a, 17b), pouvant être fermés en fonction de l'application d'une tension alternative aux bornes (38, 40) de raccordement au réseau, sont raccordés à la batterie de puissance (1),

— une résistance (18) et une diode (20) sont branchées en série sur le trajet du conducteur positif entre le troisième interrupteur (17a) et le condensateur (33),

— un convertisseur (24) d'impulsions symétriques, pouvant être connecté en plus au cours du déplacement, est branché entre les bornes de sortie du régulateur de basse puissance du chargeur de bord pour la batterie, une batterie d'accumulateurs auxiliaires, de tension plus faible que celle de la batterie de puissance (1), étant raccordée aux bornes de sortie (25) dudit convertisseur,

— lors du déplacement, le régulateur de haute puissance du chargeur de bord pour la batterie sert de régulateur de basse puissance pour le courant de champ, du fait que l'enroulement de champ (7) du moteur (6) à courant continu est raccordé, par l'intermédiaire de quatrièmes interrupteurs (8a, 8b) pouvant être fermés en cours de déplacement, à la borne positive d'entrée et de sortie du régulateur de haute puissance, et

— la batterie de puissance (1) est raccordée à des cinquièmes interrupteurs (3a, 3b) pouvant être fermés au cours du déplacement, cinquièmes interrupteurs (3a, 3b) auxquels sont raccordés le régulateur (5) de courant d'induit branché en série avec l'induit du moteur (6) à courant continu, ainsi que, par l'intermédiaire d'une diode (12), le condensateur (33).

2. Véhicule routier à accumulateur électrique selon la revendication 1, caractérisé par le fait qu'un fusible (10) est intercalé entre le condensateur (33) et la batterie de puissance (1).

3. Véhicule routier à accumulateur électrique selon au moins l'une des revendications précédentes, caractérisé par le fait qu'un fusible (22) est intercalé entre la sortie du régulateur de basse puissance du chargeur de bord pour la batterie, et la batterie de puissance (1).

4. Véhicule routier à accumulateur électrique selon au moins l'une des revendications précédentes, caractérisé par le fait qu'un dispositif (30) de chauffage du véhicule est branché en parallèle au condensateur (33).

5. Véhicule routier à accumulateur électrique selon au moins l'une des revendications précédentes, caractérisé par le fait que d'autres interrupteurs (37a, 37b) sont interposés entre les premiers interrupteurs (21b, 21c) et les bornes (38, 40) de raccordement au réseau.